(19) Europäisches Patentamt
European Patent Office
Office européen des brevets

(11) **EP 2 537 075 B1**

(12) **EUROPÄISCHE PATENTSCHRIFT**

(45) Veröffentlichungstag und Bekanntmachung des Hinweises auf die Patenterteilung:
**13.11.2013 Patentblatt 2013/46**

(21) Anmeldenummer: **11704061.8**

(22) Anmeldetag: **15.02.2011**

(51) Int Cl.:
***G05D 23/13*** *(2006.01)*

(86) Internationale Anmeldenummer:
**PCT/EP2011/052185**

(87) Internationale Veröffentlichungsnummer:
**WO 2011/098613 (18.08.2011 Gazette 2011/33)**

(54) **VERFAHREN ZUR REGELUNG EINES VENTILS**

METHOD FOR REGULATING A VALVE

PROCÉDÉ DESTINÉ AU RÉGLAGE D'UNE SOUPAPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2010 EP 10001533**

(43) Veröffentlichungstag der Anmeldung:
**26.12.2012 Patentblatt 2012/52**

(73) Patentinhaber: **Siemens Aktiengesellschaft 80333 München (DE)**

(72) Erfinder:
• **MINUTH, Stephan**
  **45475 Mülheim a.d. Ruhr (DE)**
• **RIEMANN, Stefan**
  **41564 Kaarst (DE)**
• **ROTHE, Klaus**
  **46459 Rees (DE)**

(56) Entgegenhaltungen:
**EP-A1- 0 669 566    JP-A- 58 168 111**

**Beschreibung**

Die Erfindung betrifft ein Verfahren zur Regelung eines Ventils, wobei das Ventil in einer Dampfleitung angeordnet wird, wobei die Dampfleitung eine Vorrichtung zum Einspritzen von Wasser aufweist.

Beim Starten bzw. Hochfahren eines fossilbefeuerten Kraftwerkes wird zunächst ein Kessel des Kraftwerks, der zur Erzeugung von Dampf ausgebildet ist, auf Mindestlast gefahren, was gewöhnlich zwischen 30% und 40% liegt. Der während dieser Hochfahr-Phase erzeugte Frischdampf wird hierbei im sogenannten Bypassbetrieb üblicherweise zunächst an der Dampfturbine direkt zum Kondensator vorbei geleitet. Bei Anlagen mit einer Zwischenüberhitzung wird der Frischdampf hierbei über eine Hochdruck-Umleitstation geführt, auf ein niedriges Temperaturniveau abgespritzt und dann in den kalten Strang der Zwischenüberhitzung geleitet. Der Dampf, der den heißen Strang der Zwischenüberhitzung verlässt, wird über eine Mitteldruck-Umleitstation geführt und mittels Bespritzung mit Wasser gekühlt und in den Kondensator geleitet. Durch ein hohes Druckniveau in der Zwischenüberhitzung, das üblicherweise zwischen ca. 20 bar und 30 bar liegt, ist eine effektive Kühlung der mit Rauchgas beaufschlagten Zwischenüberhitzerrohre gewährleistet.

Für den Betrieb von Dampfturbinenanlagen sind an die Reinheit des Dampfes hohe Anforderungen zu stellen. Insbesondere gilt es zu vermeiden, dass im Dampf partikelförmige Feststoffe mitgeführt werden. Solche Festkörperpartikel können zu Beschädigungen der Dampfturbine und anderen Anlagenteilen führen. Beschädigungen werden insbesondere an der Beschaufelung der Turbine anfallen.

Um eine leichte Überhitzung zu erreichen ist es erforderlich, dass die über die Mitteldruck-Umleitdampfleitung geführte Dampfmenge auf ein niedriges Temperaturniveau abgekühlt wird. Das bedeutet, dass der Umleitdampf in der Umleitdampfleitung mit Wasser abgespritzt werden muss. Allerdings erfordert dies eine zuverlässige und unmittelbare Verfügbarkeit der einzuspritzenden Wassermenge. Des Weiteren wird ein schnelles Wassereinspritzventil und eine sichere Messtechnik benötigt.

Wenn das einzuspritzende Wasser völlig ausfällt, müssen Schutzvorkehrungen getroffen werden, damit keine Beschädigungen entstehen. Derzeit werden die vorhandenen Wassereinspritzschutzvorrichtungen derart ausgelegt, dass nur ein totaler Ausfall des Einspritzwassers berücksichtigt wird.

Auch eine kurzzeitige Unterschreitung der erforderlichen Wassermenge wird als Störung betrachtet, die schlimmstenfalls zu einem gesamten Schließen der Umleitdampfleitung führen kann und sogar zu einem Trip führen könnte, das heißt, ein Abschalten der gesamten Kraftwerksanlage wäre die Folge.

Ein ausgelöster Schnellschluss der Umleitstation kann bei einem Gasturbinentrip zu Auswirkungen auf die Revisionsintervalle bzw. auf die Lebensdauer der Gasturbine führen.

Mit den derzeitigen Schutzvorkehrungen ist es durchaus möglich, dass ein Schnellschluss der Umleitstation erfolgt, obwohl bereits eine Wassermenge von größer als 90% des Sollwerts erreicht wurde und ein Schnellschluss an sich nicht erforderlich wäre.

In der EP 0 669 566 A1 wird eine Wasser-Dampf-Mischvorrichtung offenbart, bei der Wasser und Wasserdampf über getrennte absperrbare Zuleitungen in ein Mischgefäß geleitet werden.

An dieser Stelle setzt die Erfindung an, deren Aufgabe es ist, ein Verfahren zur Regelung eines Ventils anzugeben, mit  der ein Schnellschluss der Umleitstation derart ausgeführt wird, dass eine zu frühzeitige Schließung des Ventils vermieden wird.

Gelöst wird diese Aufgabe durch ein Verfahren zur Regelung eines Ventils gemäß Anspruch 1. Hierbei wird das Ventil in einer Dampfleitung angeordnet, wobei die Dampfleitung eine Vorrichtung zum Einspritzen von Wasser aufweist, wobei eine Ist-Wassermenge $\dot{m}_{W,IST}$ und eine Soll-Wassermenge $\dot{m}_{W,SOLL}$ und ein maximaler Wassermen-genfehlbetrag $FB_{max}$ ermittelt werden, und ein Quotient $t_{Rest,0}$ zwischen dem maximalen Wassermengenfehlbetrag $FB_{max}$ und der Differenz der Soll-Wassermenge $\dot{m}_{W,SOLL}$ und der Ist-Wassermenge $\dot{m}_{W,IST}$ gemäß der Gleichung

$$t_{Rest,0} = \frac{FB_{max}}{\dot{m}_{W,Soll} - \dot{m}_{W,IST}}$$ gebildet wird und das Ventil schließt, wenn $t_{Rest,0}$ kleiner einem Wert $\Delta t$ ist.

Die Erfindung geht von dem Gedanken aus, dass die derzeit existierenden Schutzvorkehrungen einen Betrieb der Umleitstation ohne ausreichende Einspritzwassermengen für eine bestimmte Zeit $t_{max}$ erlauben. Die vorgenannte Schutzvorkehrung gilt unabhängig von der Dampfmenge und der Einspritzwassermenge in der Umleitstation, d. h., dass auch für die maximale Dampfmenge und völlig fehlende Einspritzwassermengen die Schutzvorkehrungen möglich sind.

Sofern eine Einspritzwassermenge in Folge einer Störung fehlt, hat dies zur Folge, dass die Kühlung ausfällt. Die fehlende Kühlung wird bezogen auf die Enthalpiedifferenz des verdampfenden Wassers als Fehlbetrag (FB) bezeichnet und ergibt sich durch eine Integration einer Fehlmenge über die Zeit, die durch die folgende Gleichung: $\dot{m}_{W,SOLL}$ - $\dot{m}_{W,IST}$ beschrieben wird. Hierbei bezeichnet mit $\dot{m}_{W,SOLL}$ den Wasserdurchfluss und mit $\dot{m}_{W,IST}$ die Ist-Wassermengen.

Der maximal zulässige Fehlbetrag ergibt sich durch die folgende Gleichung: $FB_{max} = \dot{m}_{W,max} \times t_{max,0}$, wobei $\dot{m}_{W,max}$ die maximale Einspritzwassermenge und $t_{max,0}$ die maximale Zeit ohne Wassereinspritzung bezeichnet. Der bis zur Schnellschlussauslösung  aufgelaufene Fehlbetrag wird folgendermaßen errechnet:

$$FB_{\max} \;=\; \int_{0}^{t_{\max}} (\dot{m}_{W,SOLL} - \dot{m}_{W,IST})\,dt\;.$$

Es gilt, dass die maximal erlaubte Zeit für das Erreichen des maximal zulässigen Fehlbetrags dann erreicht ist, wenn der integral ermittelte Fehlbetrag gleich dem maximal zulässigen ist. Dies wird erreicht, wenn die folgende Gleichung erfüllt ist: $\int_{0}^{t_{\max}} (\dot{m}_{W,SOLL} - \dot{m}_{W,IST})\,dt = \dot{m}_{W,\max} x t_{\max,0}$ .

Sofern diese Gleichung nach $t_{\max,0}$ aufgelöst wird, ist die maximal erlaubte Zeit bestimmbar. Allerdings muss hier die Voraussetzung erfüllt sein, dass die ermittelten Wassermengen $m_{W.SOLL}$ und $m_{W,IST}$ gemäß der folgenden Gleichung folgen: $\dfrac{m_{W,SOLL}}{m_{W,IST}} > 1$ , was bedeutet, dass die Ist-Wassermenge zu gering ist. Erfindungsgemäß wird in bestimmten Zeitabständen $\Delta t$ die aktuell fehlende Einspritzwassermenge $m_{W,SOLL} - m_{W,IST}$ berechnet und mit dem letzten aufgelaufenen Fehlbetrag umgerechnet in eine zulässige Restzeit. Sofern diese berechnete Restzeit eine Taktrate $\Delta t$ unterschreitet, wird das Ventil geschlossen.

In den Unteransprüchen sind vorteilhafte Weiterbildungen angegeben.

In einer ersten vorteilhaften Weiterbildung wird der maximale Wassermengenfehlbetrag $FB_{\max}$ aus einer Multiplikation zwischen einer maximalen Einspritzwassermenge und einer maximalen Zeit gemäß der Gleichung $FB_{\max} = \dot{m}_{W,\max} \times t_{\max}$ gebildet.

In einer weiteren vorteilhaften Weiterbildung wird nach einer jeden Taktrate $\Delta t$ die Ist-Wassermenge $\dot{m}_{W,IST}$ und die Soll-Wassermenge $\dot{m}_{W,SOLL}$ ermittelt. Diese Taktrate kann erfindungsgemäß beliebig gewählt sein, was Auswirkungen auf die Genauigkeit der Regelung hat. Eine kürzere Taktrate führt jedenfalls zu einer genaueren Regelung als eine Regelung mit einer längeren Taktrate $\Delta t$.

Gemäß einer vorteilhaften Weiterbildung wird nach jeder Taktrate $\Delta t$ eine Restzeit $t_{Rest,i}$ ermittelt und das Ventil geschlossen, wenn die Restzeit $t_{Rest,i}$ kleiner dem Wert $\Delta t$ ist, wobei i eine bei Null beginnende Zählung einer Schleife darstellen soll, nach der jeweils die Restzeit $t_{Rest,i}$ berechnet wird. Dies hat den Vorteil, dass eine Integration erfolgt, die dazu führt, dass nicht nur ein Kriterium erfüllt sein muss, um ein Schließen des Ventils zu erreichen.

Erfindungsgemäß wird die Restzeit $t_{Rest,i}$ gemäß der Trapezregel ermittelt.

Die Erfindung wird anhand der schematischen Zeichnungen näher erläutert. Ein Ausführungsbeispiel der Erfindung wird anhand einer Zeichnung näher erläutert. Darin zeigen:

Figur 1          einen Aufbau eines Dampfkraftwerkes,
Figur 2          eine schematische Darstellung eines Ablaufschemas,
Figuren 3, 4     grafische Darstellungen auf der Zeitachse.

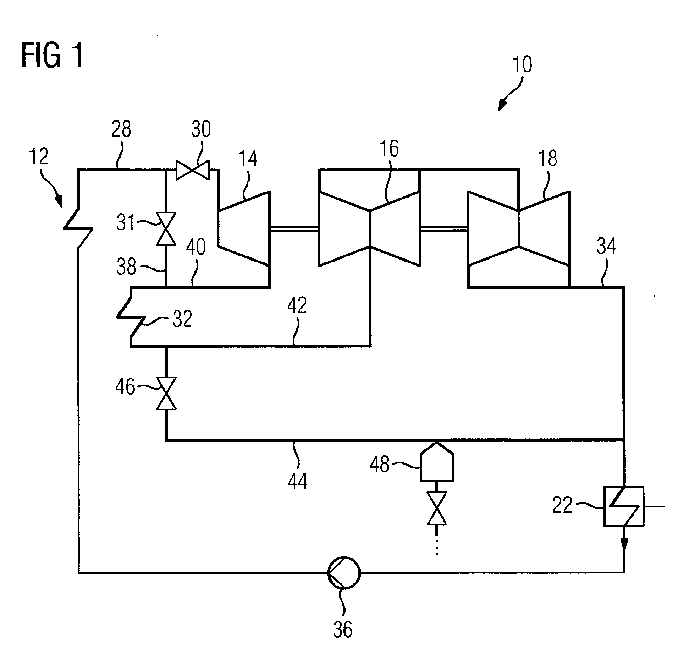

Figur 1 zeigt schematisch den Aufbau eines erfindungsgemäßen Dampfkraftwerks 10. Das Dampfkraftwerk 10 umfasst unter anderem einen Kessel 12, eine Hochdruck-Turbine 14, eine Mitteldruck-Turbine 16, eine Niederdruck-Turbine 18, einen nicht näher dargestellten Generator, einen Kondensator 22 und eine Frischdampfleitung 28. Ein im Kessel 12 erzeugter Frischdampf wird über die Frischdampfleitung 28 und über ein Frischdampfventil 30 zur Hochdruck-Teilturbine 14 geführt. Nach der Hochdruck-Turbine 14 gelangt der ausströmende Dampf zu einem Zwischenüberhitzer 32 und von dort in eine Mitteldruck-Teilturbine 16. Der Ausgang der Mitteldruck-Teilturbine 16 ist mit einem Eingang einer Niederdruck-Teilturbine 18 strömungstechnisch verbunden. Der aus der Niederdruck-Teilturbine 18 ausströmende Dampf wird über eine Niederdruckleitung 34 strömungstechnisch mit dem Kondensator 22 verbunden.

Im Kondensator 22 kondensiert der Dampf zu Wasser und wird über eine Pumpe 36 wieder zum Kessel 12 geführt, wodurch ein Wasserdampfkreislauf geschlossen ist.

Beim Anfahren oder beim Abfahren des Dampfkraftwerks 10 wird der Frischdampf über eine Bypassleitung 38 an der Hochdruck-Turbine 14 vorbeigeleitet und direkt in die kalte Zwischenüberhitzerleitung 40 geführt. Die nach der Zwischenüberhitzung 32 ausgeführte heiße Zwischenüberhitzerleitung 42 wird strömungstechnisch über eine MD-Umleitung 44 mit dem Kondensator 22 strömungstechnisch verbunden. In dieser MD-Umleitstation 44 ist ein MD-Umleitventil 46 und eine Vorrichtung 48 zum Einspritzen von Wasser in die MD-Umleitstation 44 ausgebildet.

Beim Starten bzw. Hochfahren des Dampfkraftwerks 10 wird der Kessel 12 zunächst auf Mindestlast gefahren (meist 30% bis 40%), wobei der erzeugte Dampf üblicherweise zunächst an der Hochdruck-Turbine 14 vorbeigeleitet wird (Bypassbetrieb). Der Bypassbetrieb wird hierbei durch Schließen des im Dampf-Einströmbereich der Hochdruck-Turbine 14 angeordneten Schnellschlussventils 31 realisiert, wobei der Frischdampf über eine Hochdruck-Umleitstation 38 bzw. Bypassleitung 38 geführt, auf ein niedrigeres Temperaturniveau abgespritzt und dann einer Zwischenüberhitzung 32 zugeführt wird und zwar zunächst dem kalten Strang 40 der Zwischenüberhitzung. Der Dampf, der den heißen Strang 42 der Zwischenüberhitzung verlässt, wird über eine Mitteldruck-Umleitstation 44 geführt und nach Kühlung mittels Einspitzwasser in den Kondensator 22 geleitet. Durch ein hohes Druckniveau in der Zwischenüberhitzung 32 ist dabei eine effektive Kühlung der mit Rauchgas beaufschlagten Zwischenüberhitzerrohre gewährleistet.

Die Regelung des Ventils 46 erfolgt wie folgendermaßen beschrieben: Zunächst wird eine Taktrate $\Delta t$ in Sekunden vorbestimmt bzw. eingestellt und des Weiteren ein maximal zulässiger Fehlbetrag $FB_{max}$ (in Kilogramm) berechnet, der in erster Nehrung durch folgende Gleichung ermittelt werden kann:

$$FB_{max} = \dot{m}_{W,max} x t_{max,0} \; .$$

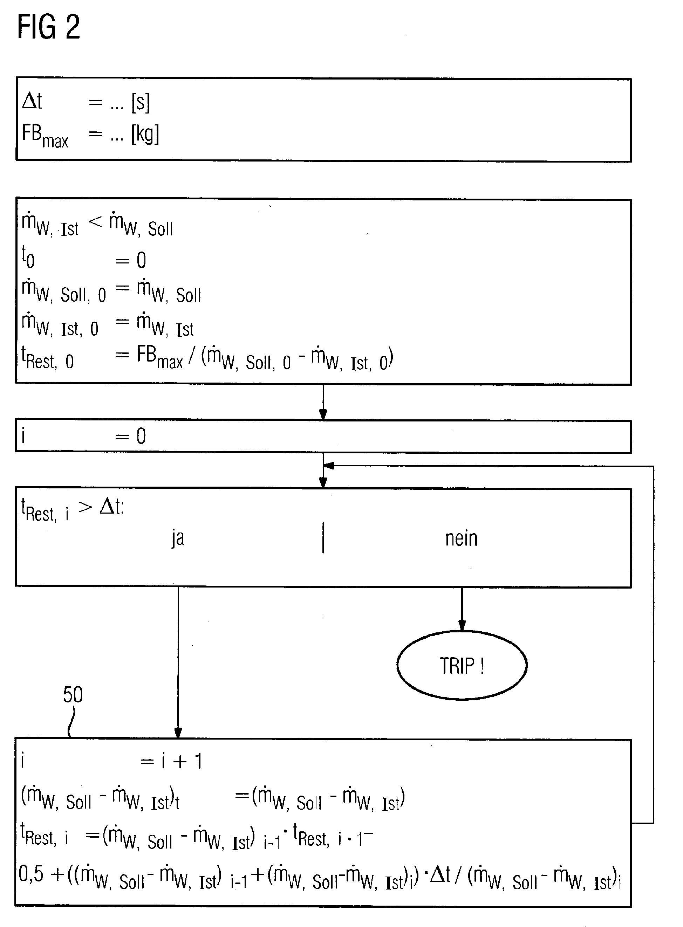

In einem nächsten Schritt wird wie in Figur 2 dargestellt, eine Zeit $t_0$ gleich 0 gesetzt, sofern die Bedingung $\dot{m}_{W,IST}$ kleiner $\dot{m}_{W,SOLL}$ erfüllt ist. Das bedeutet, dass sobald die benötigte Wassermenge in der Vorrichtung 48, die in die MD-Umleitstation 44 geführt wird, geringer ist als die Soll-Wassermenge, beginnt eine Integration. Zunächst wird eine Wassermenge aus einer Kennlinie ermittelt. Anschließend wird über eine Messung die Ist-Wassermenge ermittelt.

Anschließend erfolgt eine Berechnung der Restzeit $t_{Rest,0} = \dfrac{FB_{max}}{\dot{m}_{W,SOLL,0} - \dot{m}_{W,IST,0}}$

Zur weiteren Integration wird die Zählvariable i auf Null gesetzt. Anschließend wird ermittelt, ob die Restzeit größer ist als die Taktrate. Sofern die Restzeit größer ist als die Taktrate wird dieser Fall mit "Ja" zu einer weiteren Berechnungsschleife geführt wie in Figur 2 dargestellt. Das bedeutet, dass der Index i um eins erhöht wird und eine Restzeit gemäß der Trapezregel erneut berechnet wird. Dazu wird die im Kasten 50 aufgeführte Formel verwendet.

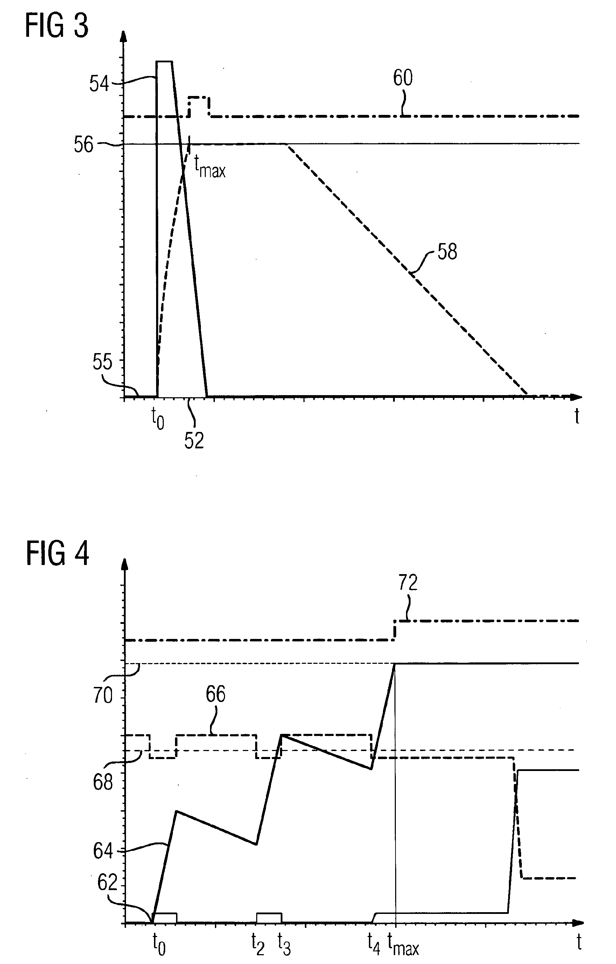

Die Figuren 3 und 4 zeigen verschiedene Verläufe der einzelnen Größen.

Die Figur 3 zeigt den Verlauf des Sollwerts 54 und den maximalen Fehlbetrag $FB_{max}$ 56 auf einer Zeitskala 52.

Zur Zeit t kleiner $t_0$ steht kein Einspritzwasser zur Verfügung, das bedeutet, dass im Zeitraum bis $t_0$ Einspritzwassermangel 55 herrscht. Ab dem Zeitpunkt $t_0$ beginnt die Integration, die durch die Kurve 58 dargestellt wird und zu einem Schnellschluss zum Zeitpunkt $t_{max}$ führt. Die Auslösung des Umleitschnellschlusses wird durch die Kurve 60 dargestellt. Die Figur 3 stellt die Situation dar, dass 100% Fehlbetrag der Wassermenge vorliegt. Das bedeutet, dass zum Beispiel das Ventil trotz Anforderung in der Position "zu" verbleibt.

Die Figur 4 zeigt einen wiederholenden Ausfall der Wassereinspritzung innerhalb einer kurzen Zeitstrecke. Zum Zeitpunkt $t_0$ beginnt der Start der Integration 62. Der Integrator 64 läuft zunächst steil an und läuft anschließend zurück. Während dieser Zeit liegt der Istwert 66 über dem Sollwert. Das bedeutet, dass während dieser Zeit ein Schnellschluss nicht erforderlich ist. Sobald der Istwert zum Zeitpunkt $t_2$ wieder unter den Sollwert fällt, wird die Integration fortgeführt, was durch den linearen Anstieg des Integrators 64 dargestellt wird. Sofern der Istwert zum Zeitpunkt $t_3$ wieder größer als der Sollwert ist, läuft der Integrator wieder zurück, was durch die gestufte Linie dargestellt ist. Zum Zeitpunkt $t_4$ ist der Istwert wieder unter dem Sollwert, was wieder zu einem Anstieg des Integrators führt. Allerdings steigt der Integrator bis zum Wert $FB_{max}$ 70 an, was dazu führt, dass ein Schnellschluss 72 zum Zeitpunkt $t_{max}$ ausgeführt wird.

**Patentansprüche**

1. Verfahren zur Regelung eines Ventils (46),
   wobei das Ventil (46) in einer Dampfleitung (44) angeordnet wird,
   wobei die Dampfleitung (44) eine Vorrichtung (48) zum Einspritzen von Wasser aufweist,
   **dadurch gekennzeichnet,**
   **dass** eine Ist-Wassermenge $\dot{m}_{W,IST}$ und eine Soll-Wassermenge $\dot{m}_{W,SOLL}$ und
   ein maximaler Wassermengenfehlbetrag $FB_{max}$ ermittelt werden,
   und ein Quotient $t_{Rest,0}$ zwischen dem maximalen Wassermengenfehlbetrag $FB_{max}$ und der Differenz der Soll-Wassermenge $\dot{m}_{W,SOLL}$ und der Ist-Wassermenge $\dot{m}_{W,IST}$ gemäß der Gleichung $t_{Rest,0} = \dfrac{FB_{max}}{\dot{m}_{W,Soll} - \dot{m}_{W,IST}}$ gebildet wird und das Ventil (46) schließt, wenn $t_{Rest,0}$ kleiner einem Wert $\Delta t$ ist.

2. Verfahren nach Anspruch 1,
   wobei der maximale Wassermengenfehlbetrag $FB_{max}$ aus einer Multiplikation zwischen einer maximalen Einspritz-

wassermenge $\dot{m}_{W,max}$ und einer maximalen Zeit $t_{max,0}$ gemäß der Gleichung $FB_{max} = \dot{m}_{W,max} \times t_{max,0}$ gebildet wird.

3. Verfahren nach einem der vorhergehenden Ansprüche,
wobei der Wert $\Delta t$ eine Taktrate ist und die Ist-Wassermenge $\dot{m}_{W,IST}$ und die Soll-Wassermenge $\dot{m}_{W,SOLL}$ nach jeder Taktrate $\Delta t$ ermittelt werden.

4. Verfahren nach Anspruch 3,
wobei nach jeder Taktrate $\Delta t$ eine Restzeit $t_{Rest,i}$ ermittelt wird und das Ventil schließt,
wenn die Restzeit $t_{Rest,i}$ kleiner dem Wert $\Delta t$ ist,
wobei i eine bei 0 beginnende Zählung einer Schleife darstellen soll, nach der jeweils die Restzeit $t_{Rest,i}$ berechnet wird.

5. Verfahren nach Anspruch 4,
wobei die Restzeit $t_{Rest,i}$ nach einer Schleife gemäß folgender Formel ermittelt wird:

$$t_{Rest,i} = ((\dot{m}_{W,SOLL} - \dot{m}_{W,IST})_{i-1} \times t_{REST,i-1} -$$
$$0{,}5 \times ((\dot{m}_{W,SOLL} - \dot{m}_{W,IST})_{i-1} + (\dot{m}_{W,SOLL} - \dot{m}_{W,IST})_i) \times \Delta t) / .$$
$$(\dot{m}_{W,SOLL} - \dot{m}_{W,IST})_i .$$

6. Verfahren nach Anspruch 4 oder 5,
wobei die Restzeit $t_{Rest,i}$ gemäß der Trapezregel ermittelt wird

7. Verfahren nach einem der vorhergehenden Ansprüche, wobei das in die Dampfleitung (44) eingespritzte Wasser zur Kühlung eines in der Dampfleitung (44) strömenden Dampfes vorgesehen ist.

8. Verfahren nach einem der vorhergehenden Ansprüche, wobei der maximale Fehlbetrag $FB_{max}$ eine fehlende Maximalmenge an zur Kühlung in die Dampfleitung (44) eingespritztem Wasser darstellt und gemäß folgender Gleichung ermittelt wird:

$$FB_{max} = \dot{m}_{W,max} \times t_{max,0} \, ,$$

wobei $\dot{m}_{W,max}$ eine maximale Einspritzwassermenge und $t_{max,0}$ eine maximale Zeit ohne Wassereinspritzung darstellt.

**Claims**

1. Method for regulating a valve (46),
wherein the valve (46) is arranged in a steam line (44),
wherein the steam line (44) has a device (48) for spraying water,
**characterized in that** an actual volume of water $\dot{m}_{W,IST}$ and a desired volume of water $\dot{m}_{W,SOLL}$ and a maximum water-volume deficiency $FB_{max}$ are determined,
and a quotient $t_{Rest,0}$ between the maximum water-volume deficiency $FB_{max}$ and the difference of the desired volume of water $\dot{m}_{W,SOLL}$ and the actual volume of water $\dot{m}_{W,IST}$ is formed according to the equation

$$t_{Rest,0} = \frac{FB_{max}}{\dot{m}_{W,SOLL} - \dot{m}_{W,IST}}$$ and the valve (46) closes if $t_{Rest,0}$ is smaller than a value $\Delta t$.

2. Method according to Claim 1,
wherein the maximum water-volume deficiency $FB_{max}$ is formed from a multiplication between a maximum volume of spray water $\dot{m}_{W,max}$ and a maximum time $t_{max,0}$ according to the equation $FB_{max} = \dot{m}_{W,max} \times t_{max,0}$.

3. Method according to one of the preceding claims,

wherein the value $\Delta t$ is a cycle rate and the actual volume of water $\dot{m}_{W,IST}$ and the desired volume of water $\dot{m}_{W,SOLL}$ are determined according to each cycle rate $\Delta t$.

4. Method according to Claim 3,
wherein according to each cycle rate $\Delta t$ a residual time $t_{Rest,i}$ is determined and the valve closes if the residual time $t_{Rest,i}$ is less than the value $\Delta t$,
wherein i is to represent a counting of a loop, starting at zero, according to which the residual time $t_{Rest,i}$ is calculated in each case.

5. Method according to Claim 4,
wherein the residual time $t_{Rest,i}$ is determined according to a loop according to the following formula:

$$
\begin{aligned}
t_{Rest,i} &= \left(\left(\dot{m}_{W,SOLL} - \dot{m}_{W,IST}\right)_{i-1} \times t_{REST,i-1} - \right. \\
&\quad \left. 0.5 \times \left(\left(\dot{m}_{W,SOLL} - \dot{m}_{W,IST}\right)_{i-1} + \left(\dot{m}_{W,SOLL} - \dot{m}_{W,IST}\right)_i\right) \times \Delta t\right) / \\
&\quad \left(\dot{m}_{W,SOLL} - \dot{m}_{W,IST}\right)_i .
\end{aligned}
$$

6. Method according to Claim 4 or 5.
wherein the residual time $t_{Rest,i}$ is determined according to the trapezoid rule.

7. Method according to one of the preceding claims,
wherein the water which is sprayed into the steam line (44) is provided for cooling steam which flows in the steam line (44).

8. Method according to one of the preceding claims,
wherein the maximum deficiency $FB_{max}$ represents a deficient maximum volume of water which is sprayed into the steam line (44) for cooling and is determined according to the following equation:

$$
FB_{max} = \dot{m}_{W,max} \times t_{max,0} \text{ ,}
$$

wherein $m_{W,max}$ represents a maximum volume of sprayed water and $t_{max,0}$ represents a maximum time without water spraying.

**Revendications**

1. Procédé de régulation d'une vanne (46),
dans lequel on monte la vanne (46) dans un conduit (44) pour de la vapeur,
dans lequel le conduit (44) pour de la vapeur a un dispositif (48) d'injection d'eau,
**caractérisé**
**en ce que** l'on détermine une quantité $\dot{m}_{w,IST}$ d'eau réelle et une quantité $\dot{m}_{w,SOLL}$ d'eau de consigne et un montant $FB_{max}$ maximum de manque de quantité d'eau,
et l'on forme un quotient $t_{Rest,0}$ entre le montant $FB_{max}$ maximum de manque de quantité d'eau et la différence entre la quantité $\dot{m}_{w,SOLL}$ d'eau de consigne et la quantité $\dot{m}_{w,IST}$ d'eau réelle, suivant l'équation

$$
t_{Rest,0} = \frac{FB_{max}}{\dot{m}_{W,Soll} - \dot{m}_{W,IST}}
$$

et on ferme la vanne (46) si $t_{Rest,0}$ est plus petit qu'une valeur $\Delta t$.

2. Procédé suivant la revendication 1,
dans lequel on forme le montant $FB_{max}$ maximum de manque de quantité d'eau, à partir d'une multiplication entre

une quantité $\dot{m}_{w,max}$ maximum d'eau d'injection et un temps $t_{max,\,0}$ maximum suivant l'équation $FB_{max} = \dot{m}_{w,max}$ x $t_{max,\,0}$.

3. Procédé suivant l'une des revendications précédentes,
dans lequel la valeur $\Delta t$ est un taux de cadencement et la quantité $\dot{m}_{w,IST}$ d'eau réelle et la quantité $\dot{m}_{w,SOLL}$ d'eau de consigne sont déterminées suivant chaque taux $\Delta t$ de cadencement.

4. Procédé suivant la revendication 3,
dans lequel, suivant chaque taux $\Delta t$ de cadencement, on détermine un temps $t_{Rest,i}$ restant et on ferme la vanne, si le temps $t_{Rest,i}$ restant est plus petit que la valeur $\Delta t$, i représentant un compte commençant à 0 d'une boucle après laquelle le temps $t_{Rest,i}$ restant est calculé respectivement.

5. Procédé suivant la revendication 4,
dans lequel on détermine le temps $t_{Rest,i}$ restant suivant une boucle, selon la formule suivante :

$$t_{Rest,i} = (\ (\ \dot{m}_{w,SOLL} - \dot{m}_{w,IST}\ )_{i-1}\ \text{x}\ t_{Rest,i-1} -$$
$$0,5\ \text{x}\ (\ (\ \dot{m}_{w,SOLL} - \dot{m}_{w,IST}\ )_{i-1} + (\ (\ \dot{m}_{w,SOLL} - \dot{m}_{w,IST}\ )_i\ )\ \text{x}\ \Delta t\ )\ 1.$$
$$(\ \dot{m}_{w,SOLL} - \dot{m}_{w,IST}\ )_i.$$

6. Procédé suivant les revendications 4 ou 5,
dans lequel on détermine le temps $t_{Rest,i}$ restant suivant la règle du trapèze.

7. Procédé suivant l'une des revendications précédentes,
dans lequel l'eau injectée dans le conduit (44) pour de la vapeur est prévu pour le refroidissement d'une vapeur passant dans le conduit (44) pour de la vapeur.

8. Procédé suivant l'une des revendications précédentes,
dans lequel le montant $FB_{max}$ maximum de manque représente une quantité maximum manquante d'eau injectée pour le refroidissement dans le conduit (44) pour de la vapeur et est déterminé par l'équation suivante :

$$FB_{max} = \dot{m}_{w,max}\ \text{x}\ t_{max,\,0}.$$

dans lequel $\dot{m}_{w,max}$ représente une quantité maximum d'eau d'injection et $t_{max,\,0}$ un temps maximum sans injection d'eau.

FIG 1

# FIG 2

$\Delta t \qquad = \ldots \text{[s]}$

$FB_{max} \quad = \ldots \text{[kg]}$

$\dot{m}_{W,\,Ist} < \dot{m}_{W,\,Soll}$

$t_0 \qquad\qquad = 0$

$\dot{m}_{W,\,Soll,\,0} = \dot{m}_{W,\,Soll}$

$\dot{m}_{W,\,Ist,\,0} = \dot{m}_{W,\,Ist}$

$t_{Rest,\,0} \qquad = FB_{max} / (\dot{m}_{W,\,Soll,\,0} - \dot{m}_{W,\,Ist,\,0})$

$i \qquad\qquad = 0$

$t_{Rest,\,i} > \Delta t:$

ja | nein

TRIP !

50

$i \qquad\qquad = i + 1$

$(\dot{m}_{W,\,Soll} - \dot{m}_{W,\,Ist})_t \qquad = (\dot{m}_{W,\,Soll} - \dot{m}_{W,\,Ist})$

$t_{Rest,\,i} = (\dot{m}_{W,\,Soll} - \dot{m}_{W,\,Ist})_{i-1} \cdot t_{Rest,\,i-1} -$

$0,5 + ((\dot{m}_{W,\,Soll} - \dot{m}_{W,\,Ist})_{i-1} + (\dot{m}_{W,\,Soll} - \dot{m}_{W,\,Ist})_i) \cdot \Delta t / (\dot{m}_{W,\,Soll} - \dot{m}_{W,\,Ist})_i$

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0669566 A1